# EUROPÄISCHE PATENTANMELDUNG

(11) **EP 1 258 450 A2**
(43) Veröffentlichungstag der Anmeldung: **20.11.2002**
(21) Anmeldenummer: 02009972.7
(22) Anmeldetag: 03.05.2002
(51) Int. Cl.: B66F 9/075, G01B 5/04

(54) **Flurförderzeug mit einer Vorrichtung zum Erfassen der Stellung eines Aktuators**

(30) Priorität: 16.05.2001 DE 10123779; 23.01.2002 DE 10202506
(71) Anmelder: STILL GMBH, D-22113 Hamburg (DE)
(72) Erfinder: Bavendiek, Rainer, Dr., 21465 Wentorf (DE); Lindemann, Bernd, Dr., 21244 Buchholz (DE)
(74) Vertreter: Lang, Michael

(57) **Zusammenfassung**

Gegenstand der Erfindung ist ein Flurförderzeug mit mindestens einem mindestens einen Hydraulikzylinder aufweisenden Aktuator und einer Vorrichtung zum Erfassen der Stellung des Hydraulikzylinders. Erfindungsgemäß umfasst die Vorrichtung zum Erfassen der Stellung des Hydraulikzylinders mindestens einen Messwertgeber, der mit einem mechanischen Antriebselement verbunden ist, das an einer Kolbenstange (2) des Hydraulikzylinders abrollt. Bevorzugt ist der Aktuator Teil einer Hubvorrichtung des Flurförderzeugs und ein hydraulischer Hubzylinder der Hubvorrichtung ist als mit einem Messwertgeber ausgerüsteter Hydraulikzylinder ausgeführt.

## Beschreibung

Die Erfindung betrifft ein Flurförderzeug mit mindestens einem mindestens einen Hydraulikzylinder aufweisenden Aktuator und einer Vorrichtung zum Erfassen der Stellung des Hydraulikzylinders.

Bei Flurförderzeugen, insbesondere bei Lagertechnikgeräten wie z.B. Schubmaststaplem, Hochregalstaplern oder Hochregalkommissionierern, bei denen der Aktuator Teil einer Hubvorrichtung ist, ist es bekannt, beispielsweise die Hubhöhe eines Lastaufnahmemittels zu bestimmen. Durch die Wirkverbindung eines Messwertgebers, z.B. eines Rollenkörpers oder eines Schalters zur kontinuierlichen bzw. stufenförmigen Erfassung der Hubhöhe mit einem Signalgeber kann über diesen ein elektrisches Signal an eine Auswerteschaltung abgegeben werden. Ein mittels der Auswerteschaltung erzeugtes Hubhöhensignal kann daraufhin zur Beeinflussung des Fahrantriebs oder der Bremsvorrichtung des Flurförderzeug herangezogen werden, indem beispielsweise die maximal zulässige Fahrgeschwindigkeit, die maximale Fahrbeschleunigung oder die maximal zulässige Bremsbeschleunigung in Abhängigkeit von dem Hubhöhensignal vorgegeben werden. Ebenso ist es möglich, eine Vorrichtung zur Hubhöhenvorwahl mittels des Hubhöhensignals zu steuern.

Aus der DE 197 31 687 A1 ist es bekannt, die Hubhöhe des Flurförderzeugs mittels eines.an einem Lastaufnahmemittel abrollbaren Reibrads zu erfassen. Die in dieser Druckschrift beschriebene Messeinrichtung ist jedoch aufgrund ihrer Anordnung im äußeren Bereich für andere Aktuatoren nicht geeignet und ist zudem äußeren Verschmutzungseinflüssen verstärkt ausgesetzt. Aufgrund der Vielzahl von benötigten Bauteilen handelt es sich hierbei um eine recht aufwändige Anordnung.

Der Erfindung liegt die Aufgabe zugrunde, eine Vorrichtung zum Erfassen der Stellung eines Hydraulikzylinders zur Verfügung zu stellen, deren mechanisches Antriebselement besser vor Verschmutzungen geschützt ist und die mit einfachen Mitteln kostengünstig realisierbar ist.

Diese Aufgabe wird erfindungsgemäß dadurch gelöst, dass die Vorrichtung zum Erfassen der Stellung des Hydraulikzylinders mindestens einen Messwertgeber umfasst, der mit einem mechanischen Antriebselement verbunden ist, das an einer Kolbenstange des Hydraulikzylinders abrollt. Diese Anordnung des mechanischen Antriebselements bewirkt, dass dieser von einem Teil des Zylinderrohrs oder einem geeigneten Aufsatz umschlossen wird und daher äußeren Einflüssen nicht mehr ausgesetzt ist.

Eine mögliche Ausführungsform besteht darin, dass das mechanische Antriebselement von einem an der Kolbenstange abrollenden Rad gebildet ist. Das Rad ist dabei im Gegensatz zu der Kolbenstange, die bei einer Bewegung des Aktuators aus- oder eingefahren wird, nicht höhenverstellbar. Die Drehbewegung des Rades wird dabei auf den Messwertgeber übertragen.

Da das mechanische Antriebselement an die Kolbenstange eines Hydraulikzylinders, an der immer Ölspuren zu finden sind, angedrückt wird, ist es zweckmäßig, dass das mechanische Antriebselement aus einem ölresistenten Material ausgebildet ist.

Weiterhin ist es vorteilhaft, wenn das mechanische Antriebselement eine Oberfläche aus Gummi aufweist, um eine hohe Reibung zwischen dem Antriebselement und der Kolbenstange zu erzielen.

Vorteile ergeben sich ebenfalls, wenn das Antriebselement in Umfangsrichtung der Kolbenstange bewegbar ist. Es können damit Laufspuren der Rolle auf der Kolbenstange vermieden werden. Die Rolle kann dabei frei beweglich oder zwangsgeführt, z.B. umlaufend sein.

Es ist zweckmäßig, wenn der Messwertgeber als Inkrementalgeber oder als Tachogenerator ausgebildet ist. Bei einem Inkrementalgeber wird mittels einer Zählschaltung das impulsförmige Ausgangssignal des Inkrementalgebers ausgewertet und aus dem Ergebnis der Zählung die aktuelle Hubhöhe hergeleitet.

Eine andere Ausgestaltungsform des Messwertgebers besteht darin, dass dieser als analoger Signalgeber, z.B. als Potentiometer ausgebildet ist. Der Widerstandswert des Potentiometers ist dabei direkt von der Stellung des Aktuators abhängig. Der direkte Zusammenhang zwischen der aktuellen Stellung des Aktuators und dem Ausgangssignal bei einem Potentiometer bewirkt, dass bei Betriebspausen keine nachgeschaltete Auswertung und Speicherung erforderlich ist.

Besonders zweckmäßig ist es, wenn der Messwertgeber mit einer Lebensdauerenergieversorgung ausgerüstet ist. Der Messwertgeber benötigt dabei keinerlei Energiezufuhr von außen, um Messsignale zu erzeugen, zu speichern und zu übertragen. Die Lebensdauerenergieversorgung kann beispielsweise von einer integrierten Batterie gebildet sein. Ebenso möglich ist es, zur Lebensdauerenergieversorgung einen von dem Antriebselement angetriebenen Generator, z.B. einen gleichzeitig auch ein Messsignal liefernden Tachogenerator vorzusehen.

Vorteilhaft ist es, wenn der Messwertgeber im Bereich eines Zylinderkopfs des Hydraulikzylinders angeordnet ist.

Wenn der Messwertgeber dabei in einem drucklosen Bereich des Zylinderkopfs angeordnet ist, ergibt sich der Vorteil, dass der Messwertgeber keine zusätzliche Belastung durch unter Druck stehendes Hydrauliköl erfährt.

In einer besonders vorteilhaften Ausführungsform der Erfindung ist der Aktuator Teil einer Hubvorrichtung des Flurförderzeugs und ein hydraulischer Hubzylinder der Hubvorrichtung ist als mit einem Messwertgeber ausgerüsteter Hydraulikzylinder ausgeführt.

Eine weitere vorteilhafte Ausgestaltung ergibt sich, wenn der Messwertgeber mit einer Anzeigevorrichtung für die Hubhöhe in Wirkverbindung steht. Hierdurch wird das Einstellen von bestimmten Hubhöhen, die beispielsweise durch Regalböden vorgegeben sind, durch die Bedienperson vereinfacht.

Ein weiterer Vorteil ergibt sich, wenn der Messwertgeber als Istwertaufnehmer in einem Regelkreis für die Hubhöhenvorwahl ausgebildet ist. Auf diese Weise ist die aktuelle Hubhöhe bekannt und kann mit der eingestellten gewünschten Hubhöhe verglichen werden, so dass der Unterschied zwischen aktueller und gewünschter Hubhöhe immer bekannt ist.

Vorteilhaft ist die Erfindung ebenfalls einsetzbar, wenn der Aktuator Teil einer Hubvorrichtung des Flurförderzeugs ist und ein hydraulischer Neigezylinder der Hubvorrichtung als mit einem Messwertgeber ausgerüsteter Hydraulikzylinder ausgeführt ist. Damit steht einer Antriebssteuerung des Flurförderzeugs stets eine Information über den aktuellen Neigungswinkel des Hubgerüsts zur Verfügung.

Ein analoger Vorteil ergibt sich, wenn der Aktuator Teil einer Hubvorrichtung des Flurförderzeugs ist und ein hydraulischer Seitenschubzylinder der Hubvorrichtung als mit einem Messwertgeber ausgerüsteter Hydraulikzylinder ausgeführt ist.

Eine für den Stabilitätszustand des Flurförderzeugs maßgebliche Größe ist der aktuelle Lenkwinkel. Deshalb ergeben sich besondere Vorteile, wenn der Aktuator Teil einer Lenkvorrichtung des Flurförderzeugs ist und ein hydraulischer Lenkzylinder der Hubvorrichtung als mit einem Messwertgeber ausgerüsteter Hydraulikzylinder ausgeführt ist.

Wenn der Messwertgeber mit einer Antriebssteuerung des Flurförderzeugs in Wirkverbindung steht, kann der Zustand der Aktuatoren von der Antriebssteuerung erfasst, ausgewertet und gegebenenfalls gespeichert werden und daraufhin zur Beeinflussung bestimmter Betriebsparameter des Flurförderzeugs herangezogen werden. Als solche Betriebsparameter kommen beispielsweise die maximal zulässige Fahrgeschwindigkeit, die maximale Fahrbeschleunigung oder die maximal zulässige Bremsbeschleunigung des Flurförderzeugs in Betracht.

Weitere Vorteile und Einzelheiten der Erfindung werden anhand des in den schematischen Figuren dargestellten Ausführungsbeispiels näher erläutert. Dabei zeigt
- Figur 1: eine erfindungsgemäße Anordnung zum Erfassen der Stellung eines Hydraulikzylinders,
- Figur 2: den Zylinderkopf eines Hydraulikzylinders.

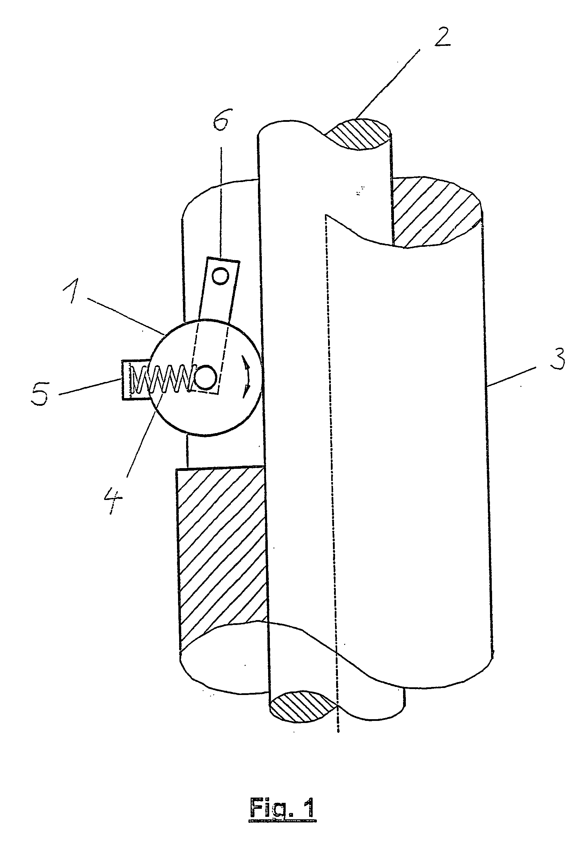

Die Figur 1 zeigt die erfindungsgemäße Anordnung einer Vorrichtung zum Erfassen der Stellung eines Hydraulikzylinders. Ein mechanisches Antriebselement, im vorliegenden Ausführungsbeispiel als Rad 1 ausgebildet, wird an eine Kolbenstange 2, die von einem Zylinderrohr 3 umschlossen ist, angedrückt. Dabei wird in dem Zylinderrohr 3 eine Aussparung belassen, um eine problemlose Befestigung des Rades 1 zu ermöglichen. Zur Befestigung des Rades 1 dient ein Hebel 6, der an dem Zylinderrohr 3 gelenkig gelagert ist. An dem Hebel 6 wiederum ist das Rad 1 drehbar um seine Mittelachse befestigt. Eine mit dem Rad 1 und einem an dem Zylinderrohr 3 befestigten Blech 5 verbundene Feder 4 drückt aufgrund der ihr innewohnenden Federkraft das Rad 1 an die Kolbenstange 2 an und gewährleistet eine ausreichende Reibung zwischen dem Rad 1 und der Kolbenstange 2. Alternativ oder zusätzlich zu der Feder 4 kann zum Andrücken des Rads 1 auch der Betriebsdruck des Hydraulikzylinders verwendet werden.

Im Falle einer Bewegung des Hydraulikzylinders wird die Kolbenstange 2 aus- oder eingefahren. Aufgrund der zwischen dem Rad 1 und der Kolbenstange 2 vorherrschenden Reibung rollt das Rad 1 dabei an der Kolbenstange 2 ab. Ein in der Figur nicht sichtbarer Messwertgeber wird daraufhin von dem Rad 1 angetrieben. Der Messwertgeber erfasst somit mittels einer integrierten Auswerteelektronik exakt die aktuelle Ausfahrlänge der Kolbenstange 2, von welcher die Länge des betreffenden Aktuators direkt abhängt. Messwertgeber und Auswerteelektronik sind miniaturisiert ebenfalls im Bereich des Hydraulikzylinders angeordnet. Das Signal der Auswerteelektronik des Messwertgebers kann mittels eines Kabels oder drahtlos an eine Steuervorrichtung des Flurförderzeugs weitergeleitet werden.

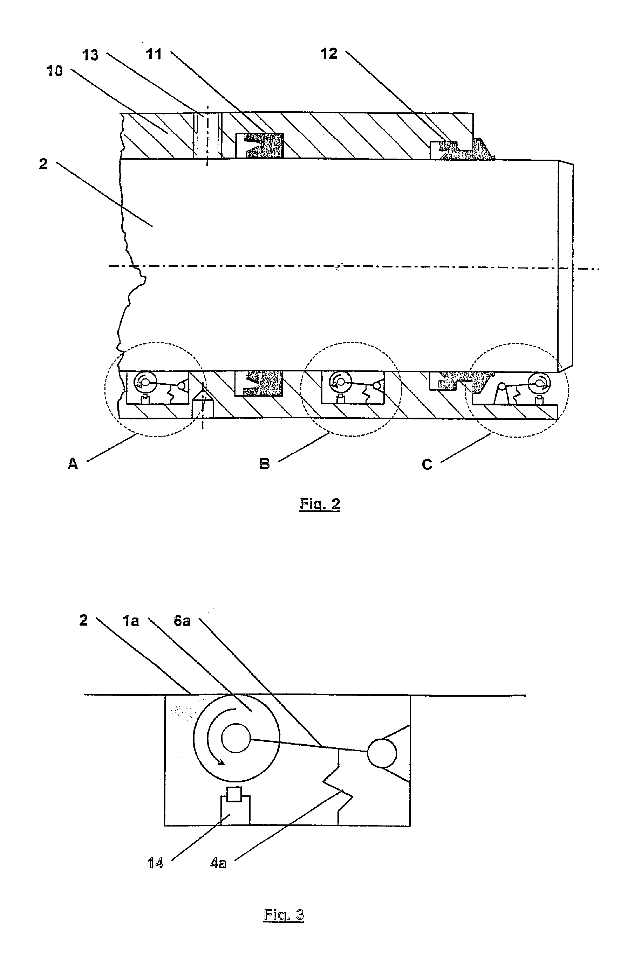

Figur 2 zeigt den Zylinderkopf 10 eines Hydraulikzylinders mit der den Zylinderkopf durchtretenden Kolbenstange 2. Der Zylinderkopf weist eine Entlüftungsöffnung 13, eine hydraulische Druckdichtung 11 sowie einen Abstreifer 12 auf. Drei mögliche Einbauorte A, B, C für den in Figur 1 dargestellten Messwertgeber sind im unteren Bereich der Abbildung eingezeichnet. Der bevorzugte Einbauort ist die Stelle B, da hier, hinter der Druckdichtung 11, kein hoher Hydraulikdruck mehr ansteht. Der Abstreifer 12 schützt den Messwertgeber dabei trotzdem vor Umgebungseinflüssen und Verschmutzung. Der Messwertgeber kann derart mit dem Dichtsystem verbunden sein, dass er mit der Druckdichtung 11 und/oder mit dem Abstreifer 12 eine Baueinheit bildet und ein gemeinsamer Einbau möglich ist.

Figur 3 zeigt vergrößert die in Fig. 2 in den möglichen Einbauorten A, B und C dargestellte Vorrichtung, die eine konstruktive Alternative zur Anordnung gemäß Fig. 1 darstellt. Zu erkennen ist ein gelenkig gelagerter Hebel 6a, an dessen einem Ende ein Rad 1a drehbar gelagert ist. Das Rad 1a wird mittels der Feder 4a an die Kolbenstange 2 angedrückt. Ein Messwertgeber 14 erfasst jede Drehbewegung des Rads 1a und erzeugt die zum Ermitteln der Ausfahrlänge der Kolbenstange 2 erforderlichen Signale.

## Patentansprüche

1. Flurförderzeug mit mindestens einem mindestens einen Hydraulikzylinder aufweisenden Aktuator und einer Vorrichtung zum Erfassen der Stellung des Hydraulikzylinders, **dadurch gekennzeichnet, dass** die Vorrichtung zum Erfassen der Stellung des Hydraulikzylinders mindestens einen Messwertgeber umfasst, der mit einem mechanischen Antriebselement verbunden ist, das an einer Kolbenstange (2) des Hydraulikzylinders abrollt.

2. Flurförderzeug nach Anspruch 1, **dadurch gekennzeichnet, dass** das mechanische Antriebselement von einem abrollenden Rad (1) gebildet ist.

3. Flurförderzeug nach Anspruch 1 oder 2, **dadurch gekennzeichnet, dass** das mechanische Antriebselement aus einem ölresistenten Material ausgebildet ist.

4. Flurförderzeug nach einem der Ansprüche 1 bis 3, **dadurch gekennzeichnet, dass** das mechanische Antriebselement eine Oberfläche aus Gummi aufweist.

5. Flurförderzeug nach einem der Ansprüche 1 bis 4, **dadurch gekennzeichnet, dass** das Antriebselement in Umfangsrichtung der Kolbenstange bewegbar ist.

6. Flurförderzeug nach einem der Ansprüche 1 bis 5, **dadurch gekennzeichnet, dass** der Messwertgeber als Inkrementalgeber oder als Tachogenerator ausgebildet ist.

7. Flurförderzeug nach einem der Ansprüche 1 bis 5, **dadurch gekennzeichnet, dass** der Messwertgeber als analoger Signalgeber, z.B. als Potentiometer ausgebildet ist.

8. Flurförderzeug nach einem der Ansprüche 1 bis 7, **dadurch gekennzeichnet, dass** der Messwertgeber mit einer Lebensdauerenergieversorgung ausgerüstet ist.

9. Flurförderzeug nach einem der Ansprüche 1 bis 8, **dadurch gekennzeichnet, dass** der Messwertgeber im Bereich eines Zylinderkopfs des Hydraulikzylinders angeordnet ist.

10. Flurförderzeug nach Anspruch 9, **dadurch gekennzeichnet, dass** der Messwertgeber in einem drucklosen Bereich des Zylinderkopfs angeordnet ist.

11. Flurförderzeug nach einem der Ansprüche 1 bis 10, **dadurch gekennzeichnet, dass** der Aktuator Teil einer Hubvorrichtung des Flurförderzeugs ist und ein hydraulischer Hubzylinder der Hubvorrichtung als mit einem Messwertgeber ausgerüsteter Hydraulikzylinder ausgeführt ist.

12. Flurförderzeug nach einem der Ansprüche 1 bis 11, **dadurch gekennzeichnet, dass** der Messwertgeber mit einer Anzeigevorrichtung für die Hubhöhe in Wirkverbindung steht.

13. Flurförderzeug nach Anspruch 10 oder 12, **dadurch gekennzeichnet, dass** der Messwertgeber als Istwertaufnehmer in einem Regelkreis für eine Hubhöhenvorwahl ausgebildet ist.

14. Flurförderzeug nach einem der Ansprüche 1 bis 13, **dadurch gekennzeichnet, dass** der Aktuator Teil einer Hubvorrichtung des Flurförderzeugs ist und ein hydraulischer Neigezylinder der Hubvorrichtung als mit einem Messwertgeber ausgerüsteter Hydraulikzylinder ausgeführt ist.

15. Flurförderzeug nach einem der Ansprüche 1 bis 14, **dadurch gekennzeichnet, dass** der Aktuator Teil einer Hubvorrichtung des Flurförderzeugs ist und ein hydraulischer Seitenschubzylinder der Hubvorrichtung als mit einem Messwertgeber ausgerüsteter Hydraulikzylinder ausgeführt ist.

16. Flurförderzeug nach einem der Ansprüche 1 bis 15, **dadurch gekennzeichnet, dass** der Aktuator Teil einer Lenkvorrichtung des Flurförderzeugs ist und ein hydraulischer Lenkzylinder der Hubvorrichtung als mit einem Messwertgeber ausgerüsteter Hydraulikzylinder ausgeführt ist.

17. Flurförderzeug nach einem der Ansprüche 1 bis 16, **dadurch gekennzeichnet, dass** mindestens ein Messwertgeber mit einer Antriebssteuerung des Flurförderzeugs in Wirkverbindung steht.
